# EUROPÄISCHE PATENTSCHRIFT

(11) **EP 0 664 412 B1**
(45) Veröffentlichungstag und Bekanntmachung des Hinweises auf die Patenterteilung: **22.04.1998**
(21) Anmeldenummer: 95100471.2
(22) Anmeldetag: 14.01.1995
(51) Int. Cl.: F16D 65/853

(54) **Vorrichtung zum Bremsen einer rotierenden Welle gegenüber einem ruhenden Maschinenteil**
Device for braking a rotating shaft relative to static machine part
Dispositif pour le freinage d'un arbre tournant par rapport à une pièce de machine à l'état de repos

(30) Priorität: 19.01.1994 DE 4401372
(43) Veröffentlichungstag der Anmeldung: 26.07.1995
(73) Patentinhaber: Ortlinghaus-Werke GmbH, 42929 Wermelskirchen (DE)
(72) Erfinder: Schönrock, Peter, D-42929 Wermelskirchen (DE); Meller, Udo, D 42929 Wermelskirchen (DE)
(74) Vertreter: Mentzel, Norbert, Dipl.-Phys.

(56) Entgegenhaltungen:
- DE-C- 2 840 300
- FR-A- 980 742
- GB-A- 2 197 924

## Beschreibung

Die Erfindung richtet sich auf eine Vorrichtung der im Oberbegriff des Anspruches 1 angegebenen Art. Eine dauernde Abbremsung ergibt sich bei Wellen in Prüfständen, wo z. B. Antriebsmotoren auf ihre Belastbarkeit geprüft werden sollen. Ein anderes Anwendungsgebiet stellen Abrolleinrichtungen dar, wo die Wellen bahnförmiges Material unter einer definierten Abzugsspannung halten sollen. Die Vorrichtung ist aber auch bei nur zeitweise abzubremsenden Wellen anwendbar.

Dauerbremsvorgänge sind mit einer hohen Verlustleistung verbunden. An den Reibflächen entsteht Wärme, die durch Kühlung abgeführt werden muß. Dafür wendete man zwar normalerweise Luftkühlung mit trocken laufenden Reibbelägen an, aber es wurden bei Vorrichtungen anderer Art auch schon naß laufende, von Kühlflüssigkeit radial durchströmte Lamellenpakete benutzt (DE 28 40 300 C2), welche einen geringen Verschleiß aufweisen.

Bei der bekannten Vorrichtung der im Oberbegriff des Anspruches 1 genannten Art (GB 2 197 924 A) wurde Kühlluft durch einen axialen Eintritt am einen Ende des Bremsabschnitts eingeführt und verließ den daran angeschlossenen Steuerabschnitt durch einen axialen Austritt. Vom Eintritt aus konnte die Kühlluft am Innenumfang der ineinandergreifenden Bremsscheiben zwar axial strömen, wurde aber durch Radialbohrungen zwischen den Bremsscheiben zum Außenumfang der Bremsscheiben geleitet. Dieser Strömungsverlauf erlaubt nur eine mäßige Abführung der an den Reibflächen entstehenden Wärme. Die axiale Lage für den Eintritt und Austritt des Kühlmittels bringt eine ungünstige Anordnung von Anschlußleitungen, die eine kompakte Bauweise der Vorrichtung verhindert.

Der Erfindung liegt die Aufgabe zugrunde, eine zuverlässige, raumsparende Vorrichtung der im Oberbegriff des Anspruches 1 genannten Art zu entwickeln, welche die Abführung einer großen, bei der Bremsung entstehenden Wärmemenge gewährleistet und sich bequem handhaben läßt. Dies wird erfindungsgemäß durch die im Kennzeichen des Anspruches 1 angegebenen Maßnahmen erreicht, denen folgende besondere Bedeutung zukommt.

Bei der Erfindung befinden sich der Eintritt und der Austritt für die Kühlflüssigkeit im Umfangsbereich des zum Bremsabschnitt gehörenden Gehäuseteils, weshalb ein radialer Anschluß für den Zufluß und Abfluß der Kühlflüssigkeit vorliegt. Dafür dienen Bohrungen in der Zylinderwand des Gehäuseteils, die mit dem Ringraum zum Anordnen der beiden Lamellenpakete führen. Die Kühlflüssigkeit wird aber von der Zuflußbohrung zunächst über einen verlängerten Radialkanal bis zu einem Innenringkanal geführt, der zu einer Umströmung des zentralen Wellenteils sorgt. Von dort aus wird die Kühlflüssigkeit allseitig verteilt, axial entlang des Innenumfangs der Lamellenpakete weitergeführt und dringt durch eine Vielzahl von Nuten in den Reibflächen zwischen den einzelnen Lamellen dann erst radial nach außen, wo sie sich schließlich am Außenumfang der Lamellenpakete axial sammeln. Von dort aus kann die Kühlflüssigkeit über die Abflußbohrung wieder radial abströmen. Dieser Strömungsverlauf kühlt die Reibflächen zwischen den Lamellen optimal und erlaubt es, große Wärmemengen abzuführen bzw. große Drehmomente auszuüben. Der Steuerabschnitt ist von der Kühlflüssigkeit frei und gestattet eine leichte Wartung und Anpassung der Vorrichtung an verschiedene Anwendungsfälle.

Weitere Maßnahmen und Vorteile der Erfindung ergeben sich aus den Unteransprüchen, der nachfolgenden Beschreibung und den Zeichnungen. In den Zeichnungen ist die Erfindung in zwei Ausführungsbeispielen dargestellt.
Es zeigen:
- Fig. 1: einen Axialschnitt durch eine erste Ausführung der erfindungsgemäßen Vorrichtung,
- Fig. 2: einen Querschnitt durch die Vorrichtung längs der Schnittlinie II-II von Fig. 1,
- Fig. 3: einen der Fig. 1 entsprechenden Axialschnitt einer abgewandelten Ausführungsform der Vorrichtung nach der Erfindung und
- Fig. 4,: eine Endansicht der Vorrichtung von Fig. 3.

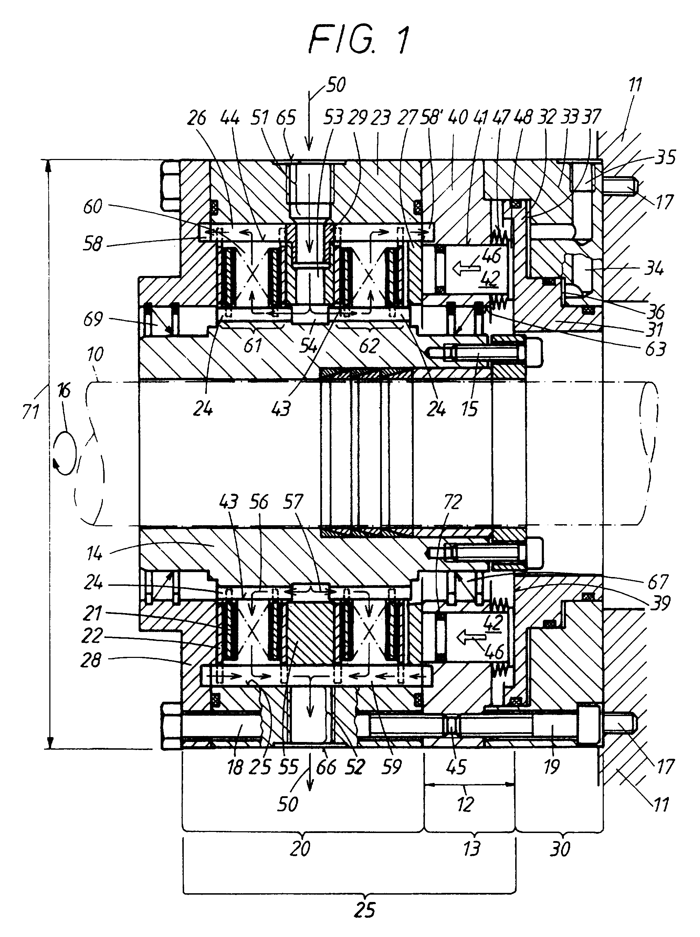

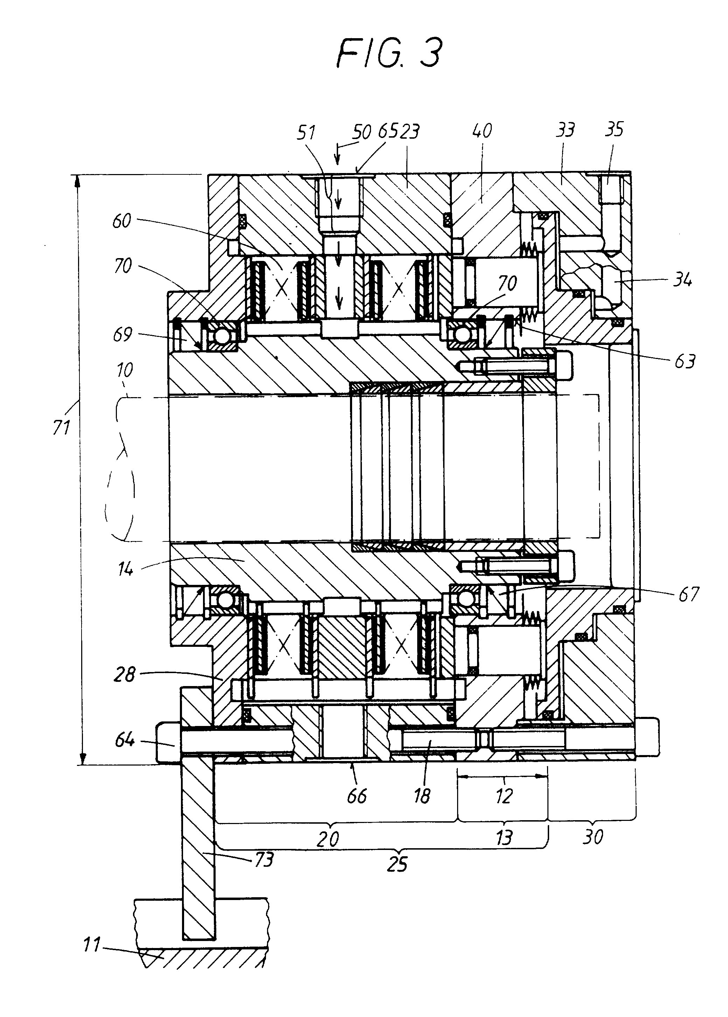

Die dargestellten Vorrichtungen sind dazu bestimmt, eine Dauerbremsung an einer strichpunktiert in Fig. 1 und 3 dargestellten Welle 10 gegenüber einem ruhenden Maschinenteil 11 auszuführen. Dazu ist die Vorrichtung in zwei funktionsunterschiedliche Axialabschnitte gegliedert, nämlich einen Bremsabschnitt 20 und einen Steuerabschnitt 30, die in einem Axialabstand 12 zueinander angeordnet sind. In diesem Abstandsbereich 12 befindet sich, als dritter Axialabschnitt 13, eine aus mehreren Gliedern zusammengesetzte Trennwand, zu welcher ein Zwischenring 40 gehört.

Der Bremsabschnitt 20 umfaßt zwei Lamellenpakete 21, 22 aus radial ineinandergeschachtelten Innenlamellen und Außenlamellen. Auf der Welle 10 ist eine Buchse 14 drehfest angebracht, was z. B. mittels der aus Fig. 1 erkennbaren, Spannkeile aufweisenden Befestigungseinrichtung 15 erfolgen kann. Die Buchse bildet einen Wellenteil 14, der im Betriebsfall mit der Welle 10 gemäß dem in Fig. 1 angedeuteten Rotationspfeil 16 umläuft und dabei über ein z. B. gezahntes Mitnahmeprofil 24 das Paket 21 der Innenlamellen mitnimmt. Die beiden Lamellenpakete werden im Umfangsbereich von einem zylindrischen Gehäuseteil 23 umschlossen, an dessen Innenfläche 25 sich ein Halteprofil 26 für die Außenlamellen des anderen Lamellenpakets 22 befindet. Zwischen dem Gehäuseteil 23 und dem Wellenteil 14 entsteht ein Ringraum 60, der die beiden Lamellenpakete 21, 22 aufnimmt.

Durch den Zwischenring 40 getrennt schließt sich der Steuerabschnitt 30 an, der einen Zylinder 33 mit im vorliegenden Fall zwei Druckmittel-Zuführungen 34, 35 zu zwei voneinander getrennten Druckmittelräumen 36, 37 eines Stufenkolbens mit zwei Kolbenteilen 31, 32 aufweist. Im Ausführungsbeispiel von Fig. 1 sind der Gehäuseteil 23, der Zwischenring 40 und der Zylinder 33 mittels durchgehender Befestigungsschrauben 17 zentriert an dem abgesetzten Maschinenteil 11 zentriert zur Welle 10 angebracht. Hier trägt die Welle 10 die Vorrichtung. Bei der Rotation 16 der Wellen 10 bleiben die Außenlamellen des Lamellenpakets 22 über das Halteprofil 26 am Gehäuseteil 23 in Ruhe.

Der Ringraum 60 zur Aufnahme der beiden Lamellenpakete 21, 22 ist am einen Axialende des Gehäuseteils 23 von dem Zwischenring 40 und am gegenüberliegenden Axialende von einer Endplatte 28 begrenzt, welche eine angesetzte Nabe aufweist. Beide Bauteile 40, 28 werden im Gehäuseteil 23 von Montageschrauben 18 festgehalten, welche in Gewindebohrungen 45 des Zwischenrings 40 eingreifen. Der Bremsabschnitt 20 mit der Endplatte 28 einerseits und dem Zwischenring 40 andererseits bildet zusammen mit dem auf der Welle 10 montierten Wellenteil 14 und den im Ringraum 60 befindlichen Wellenpaketen 21, 22 eine in sich geschlossene Bremseinheit 25, die bezüglich des Steuerabschnitts 30 unabhängig ist. Der Steuerabschnitt 30 ist mit seinem Zylinder 33 über gegensinnig montierbare Schrauben 19 in den Gewindebohrungen 45 des Zwischenrings 40 befestigt und kann daher demontiert werden, ohne daß auch Montagearbeiten im Bereich der Bremseinheit 25 ausgeführt werden müßten. Die Bremseinheit 25 und der Steuerabschnitt 30 können daher unabhängig voneinander gewartet oder repariert werden. Außerdem ist es möglich, den dargestellten Steuerabschnitt 30 durch einen hinsichtlich seiner Steuermittel z. B. stärker oder schwächer gestalteten anderen Steuerabschnitt zu ersetzen, ohne bauliche Veränderungen im Bereich der Bremseinheit 25 ausführen zu müssen. Zwischen dem Steuerabschnitt 30 und dem Bremsabschnitt 20 bestehen nämlich folgende besonderen Wirkverbindungen.

Der Zwischenring 40 besitzt parallel zur Wellenachse verlaufende Bohrungen 41, in welchen Bolzen 42 axial geführt sind. Die Bolzen 42 besitzen eine Umfangsnut mit einer Ringdichtung 72, gemäß Fig. 1. Durch die Ringdichtungen 72 od. dgl. ist dabei für eine flüssigkeitsdichte Führung in den Bohrungen 41 gesorgt, wobei eine axiale Beweglichkeit der Bolzen 42 im Sinne des aus Fig. 1 erkennbaren Druckpfeils 46 erhalten bleibt. Rückstellfedern 47 stützen sich dabei an einem hier als Endbund ausgebildeten Radialvorsprung 48 des Bolzens 42 ab und sind bestrebt, diesen in Kontakt mit der vorderen Stirnfläche 39 des Stufenkolbens 31, 32 vom Steuerabschnitt 30 zu halten. Werden über die Zuführungen 34, 35 Druckmittel zum entsprechenden Druckmittelraum 36, 37 geleitet, so fährt der Stufenkolben 31, 32 axial aus seinem Zylinder 33 heraus und stößt den Bolzen 42 mit seinem gegenüberliegenden Bolzenende an eine ringförmige Anpreßplatte 27, die sich im Ringraum 60 des Bremsabschnitts 20 befindet. Die Anpreßplatte 27 ist mit den beiden Lamellenpaketen 21, 22 axial ausgerichtet, an deren gegenüberliegendem Ende sich die Endplatte 28 befindet.

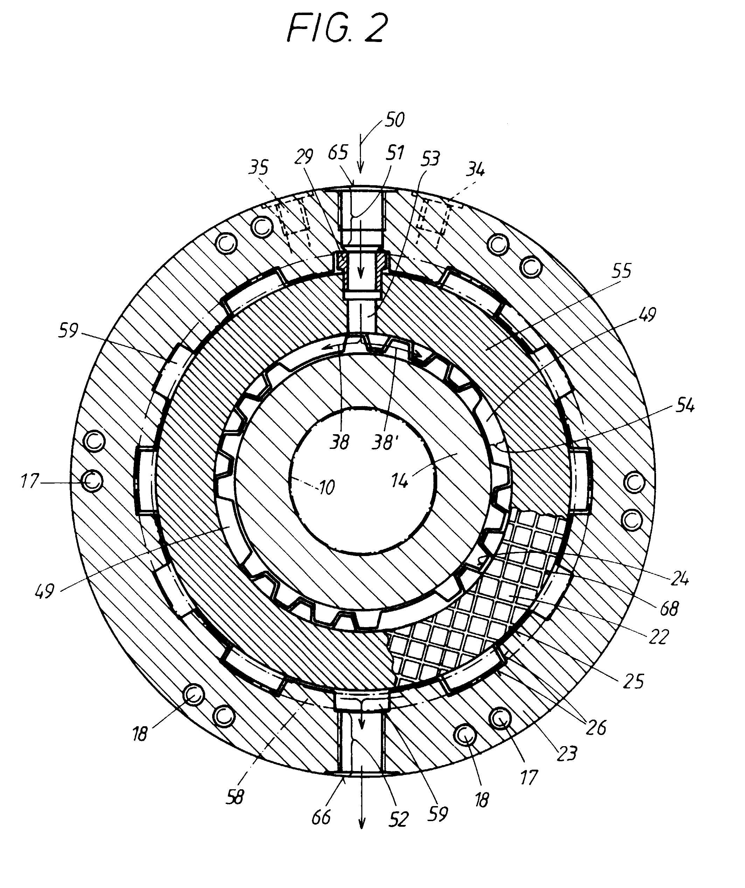

Die als axialer Abschluß der Bremseinheit 74 dienende Trennwand ist, wie bereits erwähnt wurde, mehrgliedrig ausgebildet und umfaßt außer dem Zwischenring 40 eine Wellendichtung 67, welche einen Radialabstand zwischen der Ringöffnung 63 des Zwischenrings 40 einerseits und einem abgesetzten Ende des Wellenteils 14 andererseits flüssigkeitsdicht überbrückt. Die Wellendichtung 67 wird beidendig von Sicherungsringen festgehalten. Ein ähnlicher axialer Abschluß liegt an der gegenüberliegenden Seite der Bremseinheit 74 vor. Der nabenförmige Vorsprung der dortigen Endplatte 28 nimmt ebenfalls eine ringförmige Wellendichtung 69 zwischen sie haltenden Sicherungsringen auf. Auch diese Wellendichtung 69 stützt sich an einem abgesetzten Ende des Wellenteils 14 ab. Die Kühlflüssigkeit ist daher auf den Innenraum der Bremseinheit 74 begrenzt und füllt dort alle Hohlräume aus, also auch diejenigen, die innerhalb der Lamellenpakete 21, 22 sich befinden. Die Kühlflüssigkeit unterliegt einem Zwangsumlauf und läßt im Inneren der Bremseinheit 74 folgende besondere Strömung 50 entstehen, die in Fig. 1 und 2 durch Pfeile verdeutlicht ist.

Der Eintritt 65 und Austritt 66 der Kühlflüssigkeit 50 befindet sich im Umfangsbereich des zylindrischen Gehäuseteils 23 und entsteht durch Bohrungen 51, 52, welche die Zylinderwand durchsetzen. Von ihrem Eintritt 65 aus wird die Kühlflüssigkeit 50 zunächst in einem kompakten radialen Strahl bis in den innersten Bereich der Vorrichtung, nämlich den Wellenteil 14, gebracht, wo sich ein umlaufender Innenringkanal 54 befindet. Um das zu erreichen, ist die radiale Zuflußbohrung 51 im Gehäuseteil 23 mit einem Radialkanal 53 bis zum Innenringkanal 54 verlängert. Für einen verlust freien Übergang dieser Radialströmung sorgt ein Nippel 29, der im Radialkanal 53 sitzt, mit der Zuflußbohrung 51 ausgerichtet ist und für eine Ruhelage des Radialkanals 53 bei der Rotation 16 der Welle 10 sorgt.

Der Radialkanal 53 ist inmitten der beiden Lamellenpakete 21, 22 angeordnet und gliedert diese in zwei Teilpakete 61, 62. Im vorliegenden Fall liegt er in der Radialmitte der beiden Lamellenpakete 21, 22 und erzeugt zwei gleich große Teilpakete 61, 62, die für einen spiegelbildlichen Aufbau und für eine spiegelbildlich gleiche Strömung in zwei Strömungszweigen 56, 57 der Kühlflüssigkeit sorgen. Der Radialkanal 53 entsteht durch eine radiale Bohrung in einer zwischen den beiden Teilpaketen 61, 62 angeordneten Ringscheibe 50, welche einen Radialabstand zum inneren Wellenteil 14 aufweist und dort den Innenringkanal 54 erzeugt. Dieser Innenringkanal 54 kann durch eine Vertiefung im Wellenteil 14 entstehen und ist frei von den zahnförmigen Mitnahmeprofilen 24, wie sie beidseitig davon in den Axialzonen der beiden Lamellen-Teilpakete 61, 62 angeordnet sind.

Im Innenringkanal 54 kommt es zunächst zu einer Umfangsströmung der Kühlflüssigkeit 50 um den Wellenteil 14 herum, wie in Fig. 2 durch Strömungspfeile 38, 38' verdeutlicht ist. Vom Innenringkanal 54 aus findet dann eine axiale Verteilung der Kühlflüssigkeit 50 entlang des in Fig. 1 angedeuteten Innenumfangs 43 der beiden Lamellenpakete 21, 22 statt. Um dies zu fördern, sind, wie Fig. 2 zeigt, im Bereich des Lamellen-Innenumfangs 43 mehrere Axialinnenkanäle 49 verteilt angeordnet, Die Kanäle 49 sind in den Wellenteil 14 eingelassen und frei von Mitnahmeprofilen 24 für die Innenlamellen sind.

Von diesem Innenumfang 49 des Lamellenpakets aus gelangt die Flüssigkeit durch eine Vielzahl von in Fig. 2 verdeutlichten Reibflächennuten 68, die mindestens eine radiale Komponente in ihrem Verlauf aufweisen, radial nach außen zum Außenumfang 44 der beiden Lamellenpakete 21, 22. Das ist durch den weiteren Pfeilverlauf der beiden Strömungszweige 56, 57 in Fig. 1 zu erkennen. Die Reibflächennuten 68 können in den Innen- und/oder Außenlamellen angebracht sein und entstehen durch ein Rastermuster im Reibbelag, wie aus einem Ausbruch in Fig. 2 zu erkennen ist. Die Radialströmung wird beim Umlauf der Innenlamellen durch die dann wirkende Zentrifulgakraft gefördert.

Am Außenumfang 44 der Lamellenpakete 21, 22 sammelt sich die Kühlflüssigkeit, was durch Axialaußenkammern 59 begünstigt wird, die zwischen dem Außenumfang 44 der Lamellenpakete 21, 22 und der Innenfläche vom Gehäuseteil 23 angeordnet sind. Die einzelnen Axialaußenkammern 59 sind, ausweislich der Fig. 2, im Wechsel mit dem Halteprofil 26 der Außenlamellen angeordnet. Diese Kammern 59 stehen untereinander durch zwei Außenringkammern 58, 58' in Verbindung, deren Ringverlauf strichpunktiert in Fig. 2 angedeutet ist. Die Axialkammer 58 ist in der Innenfläche der Endplatte 28 eingelassen, während die andere Außenringkammer 58' auf der dem Ringraum 60 zugekehrten Fläche des gegenüberliegenden Zwischenrings 40 angeordnet ist. In den Außenringkammern 58, 58' kommt es daher wieder zu einer Umfangsströmung im äußeren Bereich der Lamellenpakete 21, 22, wo die Kühlflüssigkeit schließlich in jene Axialaußenkammern 59 gelangen kann, von welcher die radiale Abflußbohrung 52 im Gehäuseteil 23 ausgeht. Dort wird dann, wie Fig. 1 und 2 zeigen, die Kühlflüssigkeit 50 am Austritt 66 in eine Leitung des Zwangsumlaufs abgegeben.

Während die Ringnuten 58, 58' im axialen Endbereich der Axialaußenkammern 59 angeordnet sind, wäre es stattdessen oder ergänzend auch möglich, einen Ringspalt zwischen dem Außenumfang 44 der Lamellenpakete 21, 22 und dem Gehäuseteil 23 vorzusehen. Dies kann einfach durch größere Freiräume im Halteprofil 26 zwischen den Außenlamellen und dem Gehäuseteil 23 entstehen. Im vorliegenden Fall sind zwar die Zufluß- und Abflußbohrung 51, 52 auf zwei zueinander diametral gegenüberliegenden Umfangsstellen vom Gehäuseteil 23 angeordnet, doch versteht es sich, daß diese auch in einem Winkel zueinander liegen könnten. Die Bohrungen 51, 52 könnten auch zueinander axial versetzt sein, befinden sich aber in jedem Fall im Umfangsbereich des Gehäuseteils 23.

Im Ausführungsbeispiel von Fig. 1 durchsetzt die Welle 10 axial nicht nur die in sich geschlossene Bremseinheit 74, sondern auch den zu ihrem Anschluß am Maschinenteil 11 dienenden Steuerabschnitt 30. In einem nicht näher gezeigten Alternativfall könnte die Welle 10 nur als Stummel in den Bremsabschnitt 20 hineinragen. In diesem Fall würde man über Dichtungsmittel eine Deckscheibe in die erwähnte Ringöffnung 63 des Zwischenrings 40 legen, welche die flüssigkeitsdichte Trennwand im Achsbereich bildet.

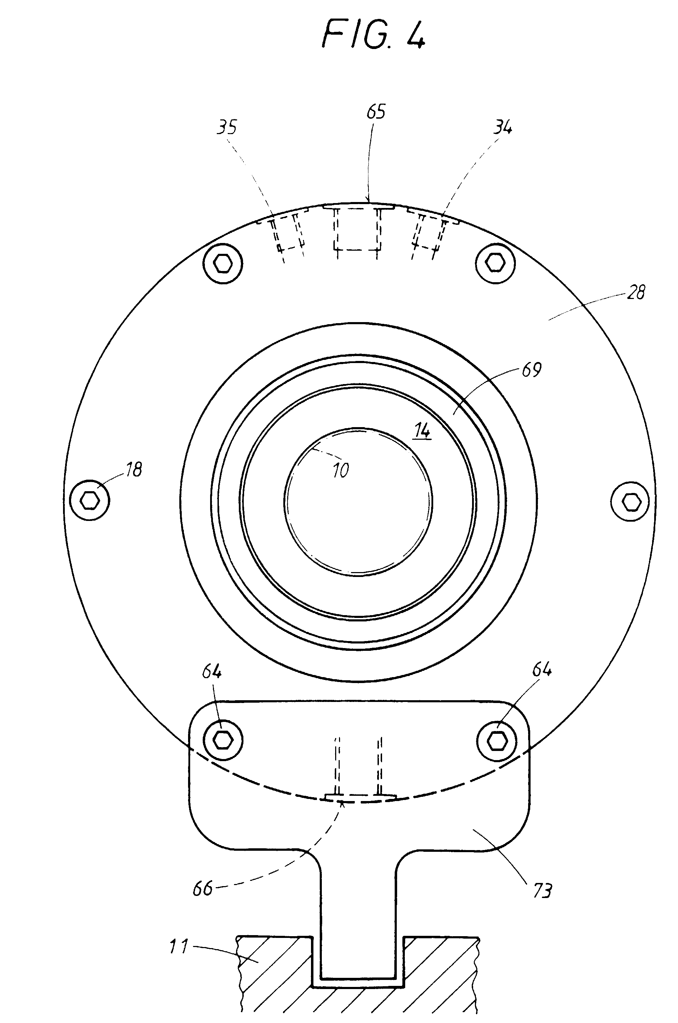

Während im ersten Ausführungsbeispiel von Fig. 1 und 2 die Vorrichtung im wesentlichen vom Maschinenteil 11 getragen wird, ist beim Ausführungsbeispiel von Fig. 3 und 4 die Welle 10 Träger der Vorrichtung. Die Vorrichtung von Fig. 3 und 4 hat im wesentlichen den gleichen Aufbau wie die Vorrichtung des vorausgehenden Ausführungsbeispiels, weshalb insoweit die bisherige Beschreibung gilt. Es genügt, lediglich auf die Unterschiede einzugehen.

Innenseitig bezüglich der beiden Wellendichtungen 67, 69 sitzen auf abgesetzten Enden des Wellenteils 14 Wälz-Lager 70, welche die äußeren Bereiche der Vorrichtung tragen. Um die auf der Welle 10 sitzende Vorrichtung an einer Mitdrehung zu hindern, ist über eine Schraube 64 eine Drehmomentstütze 73 angebracht, welche das Bremsmoment auf den ruhenden Maschinenteil 11 überträgt. In diesem Fall verringert sich der Installationsaufwand für den Käufer dieser Vorrichtung.

Wie bereits erwähnt wurde, ist die Erfindung nicht auf das dargestellte Ausführungsbeispiel beschränkt, vielmehr sind vielfache Abwandlungen möglich. So können die im Kennzeichen des Anspruches 1 angeführten Maßnahmen wie auch die in den darauf Bezug nehmenden Unteransprüchen 2 bis 11 angeführten Ergänzungen auch bei Vorrichtungen angewendet werden, die nicht den im Oberbegriff des Anspruches 1 angegebenen abschnittweisen Aufbau auf seinem Bremsabschnitt und einem damit verbindbaren Steuerabschnitt besitzen. Die sich mit diesen Maßnahmen ergebende besondere Strömung für eine wirkungsvolle Wärmeabführung ist auch bei Vorrichtungen anwendbar, wo der Steuerbereich in den Bremsbereich der Vorrichtung integriert ist.

### Bezugszeichenliste:

- 10: Welle
- 11: Maschinenteil
- 12: Axialabstand zwischen 20. 30
- 13: dritter Axialabschnitt
- 14: Buchse auf 11, Wellenteil
- 15: Befestigungseinrichtung für 14
- 16: Rotations-Pfeil von 11, 14, 21
- 17: Befestigungsschraube für 20, 30, 40
- 18: Montageschraube für 28
- 19: Schraube für 30
- 20: Bremsabschnitt
- 21: Lamellenpaket, Innenlamellen-Paket
- 22: Lamellenpaket, Außenlamellen-Paket
- 23: zylindrischer Gehäuseteil von 20
- 24: Mitnahmeprofil für 21
- 25: Bremseinheit aus 20. 40. 30
- 26: Halteprofil für 22
- 27: Anpreßplatte
- 28: Endplatte von 20
- 29: Übergangs-Nippel zwischen 51, 53
- 30: Steuereinheit
- 31: Kolbenteil
- 32: Kolbenteil
- 33: Zylinder
- 34: erste Druckmittelzuführung für 31
- 35: zweite Druckmittelzuführung für 32
- 36: Druckmittelraum für 31
- 37: Druckmittelraum für 32
- 38, 38': Pfeil der Umfangsströmung von 14 (Fig. 2)
- 39: vordere Stirnfläche von 31
- 40: Zwischenring
- 41: Bohrung
- 42: Druckstück, Bolzen
- 43: Innenumfang von 21, 22
- 44: Außenumfang von 21. 22
- 45: Gewindebohrung
- 46: Druckpfeil bei 42
- 47: Rückstellfeder
- 48: Radialvorsprung, Endbund an 42
- 49: Axialinnenkanal (Fig. 2)
- 50: Kühlflüssigkeit, Strömung
- 51: radiale Zuflußbohrung in 23
- 52: radiale Abflußbohrung in 23
- 53: Radialkanal
- 54: Innenringkanal
- 55: Ringscheibe in 20
- 56: erster Strömungszweig von 50
- 57: zweiter Strömungszweig von 50
- 58, 58': Außenringkammer in 28 bzw. 40
- 59: Axialaußenkammer in 23
- 60: Ringraum zwischen 14, 23
- 61: Teilpaket der Lamellen
- 62: anderes Teilpaket der Lamellen
- 63: Ringöffnung von 40
- 64: Schraube (Fig. 3, 4)
- 65: Eintritt für 50
- 66: Austritt für 50
- 67: Wellendichtung bei 40
- 68: Reihflächennut in 21
- 69: Wellendichtung bei 66 (Fig. 3)
- 70: Roll-Lager
- 71: Außendurchmesser von 20: 40: 30
- 72: Dichtelement an 42
- 73: Drehmomentstütze

## Patentansprüche

1. Vorrichtung zum Bremsen einer rotierenden Welle (10) gegenüber einem ruhenden Maschinenteil (11) mittels ineinander greifender Bremsscheiben, wie Lamellen (21, 22) eines Innen- und Außenlamellenpakets,
die in mindestens zwei lösbar miteinander verbindbare Axialabschnitte, nämlich einen Bremsabschnitt (20) und einen Steuerabschnitt (30), gegliedert ist und einen Eintritt (65) sowie einen Austritt (66) für ein Kühlmittel aufweist,
wobei der Bremsabschnitt (20) zwischen einem äußeren, zylindrischen Gehäuseteil (23) einerseits und einem inneren zylindrischen Wellenteil (14) andererseits einen Ringraum (60) zum Anordnen der beiden Lamellenpakete (21, 22) aufweist, der axial und radial vom Kühlmittel durchströmt wird,
und der Steuerabschnitt (30) mindestens einen durch ein Druckmittel steuerbaren Kolben (31, 32) und einen Zylinder (33) umfaßt und über wenigstens ein Druckstück (42) auf die vor einer axialfesten Endplatte (28) des Bremsabschnitts (20) liegenden Lamellenpakete (21, 22) einwirkt,
**dadurch gekennzeichnet,**
daß eine Kühlflüssigkeit (50) als Kühlmittel dient und ihr Eintritt (65) sowie Austritt (66) im Umfangsbereich vom zylindrischen Gehäuseteil (23) des Bremsabschnitts (20) angeordnet sind und aus einer die Zylinderwand des Gehäuseteils (23) durchsetzenden Zuflußbohrung (51) bzw. Abflußbohrung (52) gebildet sind,
daß ein ruhender Radialkanal (53) in dem Ringraum (60) angeordnet ist und die Zuflußbohrung (51) im Gehäuseteil (23) bis zu einem Innenringkanal (54) verlängert,
welcher den Wellenteil (14) in einer Axialzone umschließt und eine Umfangsströmung (38, 38') der Kühlflüssigkeit (50) um den Wellenteil (14) herum bewirkt,
daß die Kühlflüssigkeit (50) vom Innenringkanal (54) aus sich zunächst axial entlang des Innenumfangs der Lamellenpakete (21, 22) verteilt,
dann durch eine Vielzahl von Nuten (Reibflächennuten) in den einander berührenden Reibflächen der einzelnen Lamellen der beiden Lamellenpakete (21, 22) radial nach außen weiterfließt
und sich schließlich am Außenumfang (44) der Lamellenpakete (21, 22) axial sammelt,
und daß vom Außenumfang (44) der Lamellenpakete (21, 22) die Abflußbohrung (52) der Kühlflüssigkeit (50) im Gehäuseteil (23) austritt.

2. Vorrichtung nach Anspruch 1, dadurch gekennzeichnet, daß vom Innenringkanal (54) aus stellenweise Axialinnenkanäle (49) ausgehen, die zwischen dem Innenumfang (43) der Lamellenpakete (21, 22) und dem Wellenteil (14) angeordnet sind und zur axialen Verteilung (56, 57) der Kühlflüssigkeit (50) dienen.

3. Vorrichtung nach Anspruch 1 oder 2, dadurch gekennzeichnet, daß zwischen dem Außenumfang (44) der Lamellenpakete (21, 22) und dem Gehäuseteil (23) stellenweise Axialaußenkammern (59) angeordnet sind, in denen sich die Kühlflüssigkeit (50) sammelt.

4. Vorrichtung nach Anspruch 3, dadurch gekennzeichnet, daß die Axialaußenkammern (59) untereinander durch eine Außenringkammer (58, 58') verbunden sind und die Abflußbohrung (52) im Gehäuseteil (23) von einer dieser Axialaußenkammern (59) ausgeht.

5. Vorrichtung nach Anspruch 4, dadurch gekennzeichnet, daß eine Ringnut (58, 58') die Außenringkammer bildet und in wenigstens einer der beiden Endplatten (28, 40) eingelassen ist, welche den zur Aufnahme der Lamellenpakete (21, 22) dienenden Ringraum (60) axial begrenzt.

6. Vorrichtung nach Anspruch 4, dadurch gekennzeichnet, daß die Axialaußenkammer von einem Ringspalt zwischen dem Außenumfang (44) der Lamellenpakete (21, 22) und dem Gehäuseteil (23) gebildet ist.

7. Vorrichtung nach einem oder mehreren der Ansprüche 1 bis 6, dadurch gekennzeichnet, daß die radiale Zuflußbohrung (51) und die radiale Abflußbohrung (52) auf zueinander diametral gegenüberliegenden Umfangsstellen vom Gehäuseteil (23) des Bremsabschnitts (20) angeordnet sind.

8. Vorrichtung nach einem oder mehreren der Ansprüche 1 oder 7, dadurch gekennzeichnet, daß der ruhende Radialkanal (53) inmitten der beiden Lamellenpakete (21, 22) angeordnet ist und diese in zwei Teilpakete (61, 62) gliedert, zwischen denen der Innenringkanal (54) angeordnet ist.

9. Vorrichtung nach Anspruch 8, dadurch gekennzeichnet, daß der Radialkanal (53) in der Radialmitte der beiden Lamellenpakete (21, 22) angeordnet ist und diese in zwei gleich große Teilpakate (61, 62) gliedert,
und die Kühlflüssigkeit (50) vom Radialkanal (53) in zwei zueinander spiegelbildlich gleichen Strömungszweigen (56, 57) bis zur gemeinsamen Abflußbohrung (52) im Gehäuseteil (23) fließt.

10. Vorrichtung nach Anspruch 8 oder 9, dadurch gekennzeichnet, daß zwischen den beiden Teilpaketen (61, 62) eine Ringscheibe (55) angeordnet ist, welche durch eine Bohrung zusammen mit Bohrung (51) im Gehäuseteil (23) den ruhenden Radialkanal (53) bildet.

11. Vorrichtung nach Anspruch 10, dadurch gekennzeichnet, daß die Ringscheibe (55) einen Radialabstand zum Wellenteil (14) aufweist, und dort den Innenringkanal (54) erzeugt.

12. Vorrichtung nach einem oder mehreren der Ansprüche 1 bis 11, dadurch gekennzeichnet, daß als dritter, mittlerer Axialabschnitt (13) eine die Kühlflüssigkeit (50) abdichtende Trennwand zwischen dem Steuerabschnitt (30) und dem Bremsabschnitt (20) angeordnet ist und den Bremsabschnitt (20) zu einer in sich geschlossenen, kühlflüssigkeitsdichten Bremseinheit (74) komplettiert,
und die Trennwand stellenweise Durchbrüche (41) besitzt, in denen die Druckstücke (42) mittels Dichtelementen (72) kühlflüssigkeitsdicht aufgenommen sind.

13. Vorrichtung nach Anspruch 12, dadurch gekennzeichnet, daß ein Zwischenring (40) den Zylinder (33) der Steuereinheit (30) von dem Gehäuseteil (23) des Bremsabschnitts (20) trennt und eine Schar parallel zur Wellenachse verlaufender Bohrungen (41) aufweist, in welchen die aus Bolzen (42) bestehenden Druckstücke axialgeführt sind.

14. Vorrichtung nach Anspruch 13, dadurch gekennzeichnet, daß der Bolzen (42) einen Radialvorsprung (48) aufweist, an dem sich das eine Ende von Rückstellfedern (47) abstützt, während das andere Federende am Zwischenring (40) anliegt.

15. Vorrichtung nach einem oder mehreren der Ansprüche 12 bis 14, dadurch gekennzeichnet, daß zwischen den Lamellenpaketen (21, 22) einerseits und den Druckstücken bzw. den Bolzen (42) andererseits eine mitbewegliche Anpreßplatte (27) angeordnet ist.

16. Vorrichtung nach einem oder mehreren der Ansprüche 1 bis 15, dadurch gekennzeichnet, daß der Zylinder (33) des Steuerabschnitts (30) einen Stufenkolben (31, 32) besitzt, dessen beide Druckmittelräume (36, 37) mit je einer Druckmittelzuführung (34, 35) versehen sind.

17. Vorrichtung nach einem oder mehreren der Ansprüche 1 bis 16, dadurch gekennzeichnet, daß der Zwischenring (40) zwar am Gehäuseteil (23) des Bremsabschnitts (20) festgeschraubt ist, aber Schraubbefestigungsmittel (45; 19) zum Anschluß des Steuerabschnitts (30) aufweist.

18. Vorrichtung nach einem oder mehreren der Ansprüche 1 bis 17, dadurch gekennzeichnet, daß der zylindrische Gehäuseteil (23) des Bremsabschnitts (20) einen Außendurchmesser (71) aufweist, welcher sowohl dem Außendurchmesser des Zwischenrings (40) als auch dem Außendurchmesser vom Zylinder (33) des Steuerabschnitts (30) im wesentlichen gleich ist.

19. Vorrichtung nach einem oder mehreren der Ansprüche 1 bis 18, dadurch gekennzeichnet, daß die Trennwand mehrgliedrig ausgebildet ist und, außer dem Zwischenring (40), eine Wellendichtung (67) aufweist, die einen Radialabstand zwischen der Ringöffnung (63) des Zwischenrings (40) einerseits und einem vorzugsweise abgesetzten Ende des Wellenteils (14) andererseits flüssigkeitsdicht überbrückt, (Fig. 1).

## Claims

1. A device for braking a rotating shaft (10) relative to a static machine part (11) by means of intermeshing brake discs, such as discs (21, 22) of an internal and external disc package,
which is divided into at least two axial sections which can be joined to and detached from each other, namely a brake section (20) and a control section (30) and which has an inlet (65) and an outlet (66) for a coolant,
the brake section (20) exhibiting an annular chamber (60) between an outer cylindrical housing part (23), on the one hand, and an inner cylindrical shaft part (14), on the other hand, said chamber accommodating the two disc packages (21, 22), whereby the coolant flows axially and radially through said annular chamber (60),
and the control section (30) comprises at least one piston (31, 32) which can be controlled by a pressure agent, and one cylinder (33) and acts via at least one pressure element (42) on the disc packages (21, 22) lying in front of an axially fixed end plate (28) of the brake section (20),
characterised in that
a cooling liquid (50) serves as a coolant and its inlet (65) and outlet (66) are arranged in the circumferential area of the cylindrical housing part (23) of the brake section (20) and are formed by a supply bore (51) and a discharge bore (52), respectively, which pass through the cylinder wall of the housing part (23),
a static radial duct (53) is arranged in the annular chamber (60) and extends the supply bore (51) in the housing part (23) up to an inner annular duct (54),
which surrounds the shaft part (14) in an axial zone and creates a circumferential flow (38, 38') of the cooling liquid (50) around the shaft part (14),
the cooling liquid (50) is distributed from the inner annular duct (54) initially axially along the internal circumference of the disc packages (21, 22),
then continues to flow radially outwards through a number of grooves (friction surface grooves) in the friction surfaces in contact with each other of the individual discs of the two disc packages (21, 22)
and finally collects axially on the outer circumference (44) of the disc packages (21, 22),
and that the discharge bore (52) of the cooling liquid (50) in the housing part (23) emerges from the outer circumference (44) of the disc packages (21, 22).

2. A device according to claim 1, characterised in that axial inner ducts (49) branch off from the inner annular duct (54) at some locations, said ducts being arranged between the inner circumference (43) of the disc packages (21, 22) and the shaft part (14) and serving to axially distribute (56, 57) the cooling liquid (50).

3. A device according to claim 1 or 2, characterised in that axial outer chambers (59), in which the cooling liquid (50) collects, are arranged between the outer circumference (44) of the disc packages (21, 22) and the housing part (23) at some locations.

4. A device according to claim 3, characterised in that the axial outer chambers (59) are connected to each other by an outer annular chamber (58, 58') and the discharge bore (52) in the housing part (23) branches off from one of these axial outer chambers (59).

5. A device according to claim 4, characterised in that an annular groove (58, 58') forms the outer annular chamber and is recessed into at least one of the two end plates (28, 40) which axially limit the annular chamber (60) which serves to accommodate the disc packages (21, 22).

6. A device according to claim 4, characterised in that the axial outer chamber is formed by an annular gap between the outer circumference (44) of the disc packages (21, 22) and the housing part (23).

7. A device according to one or more of claims 1 to 6, characterised in that the radial supply bore (51) and the radial discharge bore (52) are arranged on diametrically opposite locations on the circumference of the housing part (23) of the brake section (20).

8. A device according to one or both of claims 1 and 7, characterised in that the static radial duct (53) is arranged between the two disc packages (21, 22) and divides them into two separate packages (61, 62) between which the inner annular duct (54) is arranged.

9. A device according to claim 8, characterised in that the radial duct (53) is arranged in the radial centre of the two disc packages (21, 22) and divides them into two separate packages of equal size (61, 62),
and the cooling liquid (50) flows from the radial duct (53) in two identical mirror-imaged branches of flow (56, 57) to the common discharge bore (52) in the housing part (23).

10. A device according to claim 8 or 9, characterised in that an annular disc (55) is arranged between the two separate packages (61, 62), said disc forming through a bore, together with bore (51) in the housing part (23), the static radial duct (53).

11. A device according to claim 10, characterised in that the annular disc (55) is at a radial distance to the shaft part (14) and creates the inner annular duct (54) there.

12. A device according to one or more of claims 1 to 11, characterised in that, as the third central axial section (13), a partition wall sealing the cooling liquid (50) is arranged between the control section (30) and the brake section (20) and completes the brake section (20) to create a self-contained, cooling-liquid-tight brake unit (74),
and the partition wall has at some locations openings (41) which accommodate the pressure elements (42) by means of sealing elements (72) so that said pressure elements are cooling-liquid-tight.

13. A device according to claim 12, characterised in that an intermediate ring (40) separates the cylinder (33) of the control unit (30) from the housing part (23) of the brake section (20) and exhibits a plurality of bores (41), running parallel to the shaft axis, in which the pressure elements consisting of bolts (42) are axially guided.

14. A device according to claim 13, characterised in that the bolt (42) has a radial protrusion (48) on which one end of restoring springs (47) rests while the other spring end lies against the intermediate ring (40).

15. A device according to one or more of claims 12 to 14, characterised in that a moving pressure plate (27) is arranged between the disc packages (21, 22), on the one hand, and the pressure elements or the bolts (42) ,on the other hand.

16. A device according to one or more of claims 1 to 15, characterised in that the cylinder (33) of the control section (30) has a stepped piston (31, 32) whose two pressure agent chambers (36, 37) are each provided with a supply of pressure agent (34, 35).

17. A device according to one or more of claims 1 to 16, characterised in that the intermediate ring (40) is screwed tight to the housing part (23) of the brake section (20) but has screw fastening devices (45; 19) for connecting the control section (30).

18. A device according to one or more of claims 1 to 17, characterised in that the cylindrical housing part (23) of the brake section (20) has an outside diameter (71) which is substantially the same as both the outside diameter of the intermediate ring (40) and the outside diameter of the cylinder (33) of the control section (30).

19. A device according to one or more of claims 1 to 18, characterised in that the partition wall comprises several elements and, apart from the intermediate ring (40), has a shaft seal (67) which bridges in a liquid-tight manner a radial distance between the annular opening (63) of the intermediate ring (40), on the one hand, and a preferably stepped end of the shaft part (14), on the other hand (Fig. 1).

## Revendications

1. Dispositif servant à freiner un arbre, tournant (10) par rapport à une pièce-machine immobile (11), au moyen de disques de frein engrenant les uns dans les autres, tels que les lamelles (21, 22) d"un paquet de lamelles intérieures et extérieures,
organisé en au moins deux segments axiaux reliables entre eux de manière non définitive, à savoir un segment de freinage (20) et un segment de commande (30), et présentant un orifice d'admission (65) et un orifice de sortie (66) d'un fluide de refroidissement,
le segment de freinage (20) présentant, entre un carter cylindrique extérieur (23) d'une part et un arbre cylindrique intérieur (14) d'autre part, un espace annulaire (60) servant à agencer les deux paquets de lamelles (21, 22), et traversé axialement et radialement par le produit réfrigérant.
et le segment de commande (30) englobant au moins un piston de commande (31, 32) pilotable par un fluide sous pression et un cylindre (33), et agissant par le biais d'au moins une pièce de compression (42) sur les paquets de lamelles (21, 22) reposant devant la plaque terminale axialement fixe (28) du segment de freinage (20),
**caractérisé en ce que**
un liquide (50) sert de fluide de refroidissement et que son orifice d'entrée (65) et son orifice de sortie (66) se trouvent dans la périphérie de la pièce de carter (23) cylindrique du segment de freinage (20) et qu'ils sont formés par un alésage d'alimentation (51) et un alésage d'évacuation (52) traversant la paroi cylindrique du carter (23),
un canal radial immobile (53) est disposé dans le compartiment annulaire (60) et qu'il prolonge l'alésage d'alimentation (51) dans le carter (23) jusqu'à un canal annulaire intérieur (54),
lequel enveloppe l'arbre (14) dans une zone axiale et provoque la formation d'un flux périphérique (38, 38') du liquide de refroidissement (50) autour de l'arbre (14),
le liquide de refroidissement (50) se répartit, depuis le canal annulaire intérieur (54) d'abord axialement le long de la circonférence intérieure des paquets de lamelles (21, 22),
le liquide circule ensuite par une multitude de rainures (rainures à surfaces de friction) dans les surfaces de friction en contact mutuel de chaque lamelle appartenant aux deux paquets de lamelles (21, 22), pour continuer de s'écouler radialement vers l'extérieur
et enfin le liquide s'accumule axialement contre la circonférence extérieure (44) des paquets de lamelles (21, 22);
et en ce que depuis la circonférence extérieure (44) des paquets de lamelles (21, 22), l'alésage d'écoulement (52) du liquide de refroidissement (50) sort dans le carter (23).

2. Dispositif selon revendication 1, caractérisé en ce que des canaux axiaux intérieurs (49) partent localement du canal annulaire intérieur (54) et sont disposés entre la circonférence intérieure (43) des paquets de lamelles (21, 22) et l'arbre (14), et qu'ils servent à répartir axialement (56, 57) le liquide de refroidissement (50).

3. Dispositif selon la revendication 1 ou 2, caractérisé en ce qu'entre la circonférence extérieure (44) des paquets de lamelles (21, 22) et le carter (23) sont disposées localement des chambres axiales extérieures (59) dans lesquelles s'accumule le liquide de refroidissement (50).

4. Dispositif selon la revendication 3, caractérisé en ce que les chambres axiales extérieures (59) sont reliées entre elles par une chambre annulaire extérieure (58, 58') et que l'alésage d'écoulement (52) dans le carter (23) part de l'une de ces chambres axiales extérieures (59).

5. Dispositif selon la revendication 4, caractérisé en ce qu'une rainure annulaire (58, 58') forme la chambre annulaire extérieure et qu'elle est ménagée dans au moins l'une des deux plaques terminales (28, 40), laquelle limite axialement l'espace annulaire (60) servant à loger les paquets de lamelles (21, 22).

6. Dispositif selon la revendication 4, caractérisé en ce que la chambre axiale extérieure est formée par un interstice annulaire entre la circonférence extérieure (44) des paquets de lamelles (21, 22) et le carter (23).

7. Dispositif selon l'une ou plusieurs des revendications 1 à 6, caractérisé en ce que l'alésage radial d'alimentation (51) et l'alésage radial d'écoulement (52) sont disposés en deux points diamétralement opposés du carter (23) du segment de freinage (20).

8. Dispositif selon l'une ou plusieurs des revendications 1 ou 7, caractérisé en ce que le canal radial immobile (53) est agencé au milieu des deux paquets de lamelles (21, 22) et qu'il les divise en deux paquets partiels (61, 62) entre lesquels est agencé le canal annulaire intérieur (54).

9. Dispositif selon la revendication 8, caractérisé en ce que le canal radial (53) est agencé au centre radial des deux paquets de lamelles (21, 22) et qu'il les divise en deux paquets partiels (61, 62) de taille égale,
et en ce que le liquide de refroidissement (50) s'écoule du canal radial (53) par deux flux aux branches (56, 57) symétriquement agencées pour aboutir à l'alésage commun d'écoulement (52) situé dans le carter (23).

10. Dispositif selon la revendication 8 ou 9, caractérisé en ce qu'entre les deux paquets partiels (61, 62) est agencé un disque annulaire (55) qui, par le biais d'un alésage associé à l'alésage (51) dans le carter (23), forme le canal radial immobile (53).

11. Dispositif selon la revendication 10, caractérisé en ce que le disque annulaire (55) présente un écart radial par rapport à l'arbre (14) et qu'il y engendre un canal annulaire intérieur (54).

12. Dispositif selon l'une ou plusieurs des revendications 1 à 11, caractérisé en ce qu'une paroi séparatrice formant le troisième segment axial médian (13) et étanchant le liquide de refroidissement (50) est agencée entre le segment de commande (30) et le segment de freinage (20), et complète le segment de freinage (20) pour qu'il forme une unité de freinage (74) fermée sur elle-même, étanche au liquide de refroidissement,
et en ce que la paroi séparatrice possède localement les orifices de passage (41) dans lesquels sont logées les pièces de compression (42) de manière étanche au liquide de refroidissement, par le biais d'éléments d'étanchéité (72).

13. Dispositif selon la revendication 12, caractérisé en ce qu'un anneau intermédiaire (40) sépare le cylindre (33), équipant l'unité pilote (30), du carter (23) du segment de freinage (20), et qu'il présente un grand nombre d'alésages (41) au tracé parallèle à l'axe de l'arbre, dans lesquels sont guidés axialement les pièces de compression formées par des goujons (42).

14. Dispositif selon la revendication 13, caractérisé en ce que le goujon (42) présente une saillie radiale (48) contre laquelle s'appuie une extrémité des ressorts de rappel (47), tandis que l'autre extrémité des ressorts s'appuie contre l'anneau intermédiaire (40).

15. Dispositif selon l'une ou plusieurs des revendications 12 à 14, caractérisé en ce qu'une plaque de compression (27) elle aussi mobile est disposée entre les paquets de lamelles (21, 22) d'une part et les pièces de compression ou goujons (42) d'autre part.

16. Dispositif selon l'une ou plusieurs des revendications 1 à 15, caractérisé en ce que le cylindre (33) du segment de commande (30) possède un piston à gradins (31, 32) dont les deux compartiments à fluide de compression (36, 37) sont dotés chacun d'un moyen d'alimentation en fluide de compression (34, 35).

17. Dispositif selon l'une ou plusieurs des revendications 1 à 16, caractérisé en ce que l'anneau intermédiaire (40) est certes vissé contre le carter (23) du segment de freinage (20), mais qu'il présente des moyens de fixation par vis (45; 19) en vue du raccordement du segment de commande (30).

18. Dispositif selon l'une ou plusieurs des revendications 1 à 17, caractérisé en ce que le carter cylindrique (23) du segment de freinage (20) présente un diamètre extérieur (71) lequel est pour l'essentiel identique aussi bien au diamètre extérieur de l'anneau intermédiaire (40) qu'au diamètre extérieur du cylindre (33) du segment de commande (30).

19. Dispositif selon l'une ou plusieurs des revendications 1 à 18, caractérisé en ce que la cloison séparatrice est configurée en plusieurs éléments et qu'elle présente, outre l'anneau intermédiaire (40), un joint d'arbre (67) qui ponte de manière étanche au liquide un écart radial entre d'une part l'orifice annulaire (63) de l'anneau intermédiaire (40) et d'autre part une extrémité de préférence décalée en hauteur de l'arbre (14) (Fig. 1).
